# EUROPEAN PATENT SPECIFICATION

(11) **EP 2 576 755 B1**
(45) Date of publication and mention of the grant of the patent: **30.08.2017**
(21) Application number: 10728299.8
(22) Date of filing: 25.05.2010
(51) Int. Cl.: C12G 1/00, C12G 1/02

(54) **IMPROVED FERMENTATION APPARATUS**
VERBESSERTES FERMENTATIONSGERÄT
APPAREIL DE FERMENTATION PERFECTIONNÉ

(43) Date of publication of application: 10.04.2013
(73) Proprietor: Noform S.r.l., 30020 Meolo (VE) (IT)
(72) Inventor: CROSATO, Remo, I-30020 Meolo (venezia) (IT)
(74) Representative: Citron, Massimiliano
(86) International application number: PCT/IB2010/052312
(87) International publication number: WO 2011/148227

(56) References cited:
- EP-A1- 1 314 778
- EP-A1- 1 964 914
- EP-A1- 2 060 624
- EP-A1- 2 179 664
- WO-A1-97/44437
- DE-A1- 3 307 229
- DE-A1- 3 415 702
- DE-A1- 3 615 551

## Description

The present invention concerns an improved fermentation apparatus for pressed vegetable products made up of juice, in particular grape must, and the relative skin. The apparatus is configured like an improved plunging and/or pressing apparatus for the skin.

Known fermentation apparatuses, here discussed as an example vinification apparatuses, are formed by a tank in which must can ferment creating a layer of floating skin (called cap) on a liquid part.

During the vinification the cap is broken up and sprayed with the underlying juice so as to extract its essence and the flavours. Pumps and sprayers are for example used to spray, drawing the must from below the cap and sprinkling it above the cap.

In order to break and immerse all or part of the cap into the underlying must, blades are used, for example, rotating around a horizontal axis. Other systems, see EP 2 058 384 by the Applicant; store under pressure the CO₂ produced during fermentation and use it to break and spray the cap.

Some plunging means consist of linearly movable members for mechanically breaking the cap, by immersing it into the liquid part up to a certain intermediate level of the tank. With particular reference to fermentation tanks, there are three types of plunging means.

The first one envisages the positioning of one or more pistons adapted for moving a single rigid grid which occupies from half to about the entire inner surface of the vinificator. The plunging only envisages the immersing of a part of cap or all of it. A problem is that the rigid grids have a constant surface, and therefore do not make it possible to modify the quantity of cap immersed at each plunging operation.

The second one regards the positioning of a movable piston on the open top of the vinificator, said piston having a cap plunging grid/plate. The grid has a surface of about 1/4-1/3 of the section of the vinificator. Each time, the piston and the relative plunging plate are moved on a different part of the cap, immersing one fraction at a time.

The third one normally envisages two or more plunging pistons, fixed on the top of the vinificator, which vertically move two or more half-moon shaped grids inside the tank. Together the grids horizontally occupy almost the entire section of the tank. The pistons lower to about half of the tank, either alternately or simultaneously. In the first case it is thought that the immersed part of the cap can float back up from below the part that is still floating, remixing it. But instead it floats back up at the same point in which it has been immersed, due to the hydrodynamic thrust that is only vertical. In the second case the cap sinks completely and as a block, without any remixing and breaking.

In brief, there is still the problem that the cap is only sinked but not mixed.

Once the fermentation is completed, a real problem experienced in red wines is the transfer of the pomace from the vinificator to a press without the pomace itself and the contained must oxidising. For white wines the problem is even more serious, since the vinification envisages either the pressing with direct sending into the press or the transfer of the pressed product in fermentation tanks, called cryomacerators. From the cryomacerators, which are equipped with wide thermoregulator pockets (heat exchangers applied circumferentially onto the tank) for lowering the temperature, the pressed product then passes in the press for the separation of the liquid part from the skin.

By directly sending it into the press, on the other hand, the pressed product normally passes through a tube-in-tube heat exchanger for lowering the temperature, so as to avoid organoleptic degradation. In order to transfer the pressed product, pumps are used that however deteriorate it.

Conventional methods of vinification of red and white wines thus cause a great loss of organoleptic properties in the final wine.

The patent FR 2 832 353 describes and tackles the same vinification problems as well. The solution is to press the must inside a vinificator with a piston or an inflatable membrane. Since the tank is opened and the membrane is inserted (by hand) to then inflate it, the pomace is contaminated with air and inert atmosphere is not used. It is not possible to use this system in automated and/or repetitive processing, due to the slow inflation speed for such a big membrane and the practical impossibility of plunging. Moreover, the pressing action is not very or not at all efficient. Only a fraction of the membrane squashes the pomace, assumed that this occurs if the pomace does not have a too low level and thus not reached by the inflated membrane. The membrane can only push the pomace when it has reached and presses against the walls of the tank, with great limitation of its active surface on the pressed product. The same solution, with practically the same drawbacks, is disclosed in FR 2 708 243.

DE 3 615 551 discloses a tank for red wines provided inside with a movable chamber housing an inflatable membrane.

The general object of the invention is to improve this state of the art. Further objects are:
- making an improved fermentation apparatus that better maintains the organoleptic properties of the must and/or makes it possible to remix the sinked cap (or skin); and
- proposing a new apparatus that integrates the functionalities of a pressed-product fermentation tank and of a press for squeezing the skin.

According to the invention, the improved fermentation apparatus comprises the features of Claim 1. The inflatable means or element are used to substantially move/push the cap towards the bottom and the walls of the tank, and therefore, as explained below, it makes it possible to process the cap with many innovative methods, amongst which a method
- for the plunging, with which an excellent circulation and remixing of the cap floating on the must is obtained, and/or an improved oxygenation/ventilation of the cap;
- for pressing the cap inside the fermentation apparatus when the must or liquid part has been evacuated.

An inflatable element or means arranged on the plunging means promotes the following very advantageous effects:
- it can be used to vary the active surface of the plunging plate, i.e. that which pushes down on the cap. This (differently from the rigid plunging plates normally used) makes it possible to vary the surface and the volume of the pomace cap that is wished to be sinked in the must, multiplying the processing variants for the cap;
- carrying out the plunging the inflatable element moves the sinked cap away from the plunging means and promotes an innovative path for the sinked cap while it floats back up below the remaining floating cap; and
- makes it possible to press the cap on the bottom of the tank. The inflatable element or means can be inflated before lowering the plunging means to the suitable level on the pomace cap, or after.

There can be many plunging means, and on each even more than one inflatable element or means can be mounted.

As can be seen, the apparatus of the invention completely avoids the organoleptic degradation due to mechanical stress caused by conventional means (pumps, belts, etc.) for transferring must and pomace from the fermentation tank to a press. A fermentation tank can easily be equipped with wide pockets or thermoregulation means, and this makes it possible to avoid using tube-in-tube heat exchangers directly after the pressing to drop the temperature.

Another advantage that is obtained when carrying out the fermentation and the pressing in a single tank is that, since the tank is a closed body that can communicate with the outside through valves, the empty space not occupied by must/pomace can easily be made aseptic by using special gasses (for example nitrogen or CO₂) that prevent the must from oxidising.

The inflatable element, preferably an inflatable membrane, can be inflated with fluid, through for example pumps, or through overpressure. The deflation is obtained for example through venting valves or sucking of fluid.

Preferably the plunging means comprise one or more pistons anchored in a fixed or movable manner to the top of the tank, with movable stems inside the tank and a plunging surface (for example a plunging plate, mesh or grid) mounted at the free and movable end of the piston. On the side of the plunging surface or plate facing towards the bottom of the tank, an inflatable element is mounted. This very simple and effective solution maximises the integration of the inflatable element, even in known fermenters. Moreover, the plunging surface, which is rigid, acts as a thrust-bearing and as a support for the inflatable element.

It has experimentally been found that it is preferable to use:
- either a single plunging plate or surface, pushed by one or more pistons, which preferably has an area of about half to 2/3 of that of the horizontal section of the tank. When the membrane is deflated, this makes it possible to sink about half a cap at a time with good remixing results, which is greatest if the plate is at the centre of the tank, so that the cap can rise back up between the perimeter of the plate and the walls of the tank. If the membrane is inflated before starting the plunging, the amount of cap which will be sinked can be proportionally varied.
- or two, three or more plunging surfaces, preferably half-moon shaped, which together occupy at least two thirds of the surface of the tank. Each plunging plate/surface is moved by a suitable number of pistons (one, two etc.). Each plunging surface is equipped with at least one inflatable element on the lower face. With suitable means the pistons are moved, one at a time or in sub-groups, alternating the thrust on the cap, and therefore preferably alternating the inflation of the inflatable elements themselves during the plunging /vinification/fermentation.

It should be noted that coupling an inflatable element with the plunging means intrinsically has the following advantage. Whereas during the plunging (inflatable element deflated) the rigid plunging surface mechanically acts upon the cap on an area which is smaller than that of the section of the tank, and therefore it lets the cap and/or the must go up at the sides, during the pressing the inflatable element is inflated and, starting from the rigid plunging surface, it can widen so as to occupy the entire section of the tank and thus press the underlying cap on the entire section of the tank.

In order to improve pressing efficiency, a plunging surface can also be provided with one or more circumferential inflatable elements or means with a sealing function, preferably mounted on the perimeter of the plunging surface and adapted for being inflated so as to reach the side walls of the tank and for preventing must from flowing above the plunging surface. The purpose is that of sealing the entire volume, inside the apparatus, that is interested in the pressing action of the pomace, thus preventing the must from flowing out and escaping above the pressing surface (which is the plunging surface).

It is preferable (but not necessary) for the tank to have a frustoconical shape with the larger base defining the bottom. In this way when the inflatable element expands inside the must and raises the level of the must, the cap interacts with the slanting walls of the tank and, first, upon rising it becomes compact and then it breaks up when going down (when the inflatable element is deflated).

Another preferable and advantageous function of the inflatable element or means, as already mentioned, is the pressing of the cap. With it, the cap can be pressed against the bottom of the tank, and on the bottom there can be means for draining and/or sifting the cap during a pressing cycle carried out with the inflatable means. In such a way the fermentation apparatus actually behaves as a press, and there is no need to transfer the pomace cap outside it.

In order to optimise the apparatus, the bottom of the tank can comprise ducts draining towards a gathering and evacuation point of the juice derived from the pressing of the inflatable element or means. From the gathering point, the extracted juice is easily channelled towards a storage point.

The pressing step can be highly optimised through means, arranged on the bottom of the tank, for divaricating and/or breaking the cap when it lays on the bottom of the tank. Opening and breaking the deposited cap increases the exposed surface from which the juice can come out.

As a simple but effective preferred variant, the divaricating means comprise a rotatable member equipped with protrusions (for example baffles, tabs, teeth, blades, combs, etc.) adapted for stirring up and/or cutting the cap when the member rotates. Opening the cap increases the draining surface, and thus increases the efficiency and quality of the pressing.

The protrusions are preferably positioned radially each at a different distance from the rotation centre of the rotatable member. In such a way the cutting action of the protrusions is maximised.

It is advantageous, but optional, for the protrusions and/or the rotatable member to be equipped with draining means for draining the must during the pressing. In such a way the draining surface of the tank is increased.

Preferably the rotatable member is automated with motor means, for example a stepping motor, adapted for making it rotate by a fraction or multiple, also not integer, of a round angle at every pressing cycle. Therefore, at each pressing, the cap is widened in a different angle sector. At the end of the cycle the entire cap has been opened and pressed.

Advantageously, in order to involve the cap and the must to a greater extent, it can be provided for entry of air and/or of an air/inert gas mixture to come from the bottom of the tank, for example providing the rotatable member, placed on the bottom, with nozzles set in communication with gas injection ducts and/or with a must draining tube.

For the same purpose, it is a simple solution to use a non-return valve, which in the inflation step prevents must from flowing out, and in the deflation step allows air to be introduced.

In an even more simple manner, for the sole ventilation of the pomace cap, the hatch arranged at the top of the apparatus can be opened: the outlet of CO₂ and the introduction of air occurs naturally.

The invention and its advantages shall become clearer from the following description of some preferred embodiments, illustrated in the attached drawing in which:
Fig. 1 shows a transparent front view of a vinificator according to the invention in a first configuration;
Fig. 2 shows a transparent side view of the vinificator of Fig. 1 in a second configuration;
Fig. 3 shows a section view of the vinificator of Fig. 1 according to the plane III;
Fig. 4 shows a top view of the single bottom of the vinificator of Fig. 1;
Figs. 5-6 show the pressing steps of the must in the vinificator of Fig. 1;
Figs. 7-11 show the downward thrusting steps in the vinificator of Fig. 1;
Fig. 12 shows a final processing step in the vinificator of Fig. 1;
Figs. 13-20 show various configurations in the pressing steps of the vinificator of Fig. 1;
Figs. 21-25 show downward thrusting steps of a second vinificator;
Figs. 26-27 show pressing steps of the must in the vinificator of Figs. 21-25;
Fig. 28 shows a transparent front view of a third vinificator in a first configuration;
Fig. 29 shows a transparent side view of the vinificator of Fig. 28 in a second configuration;
Fig. 30 shows shapes of downward thrusting plates.

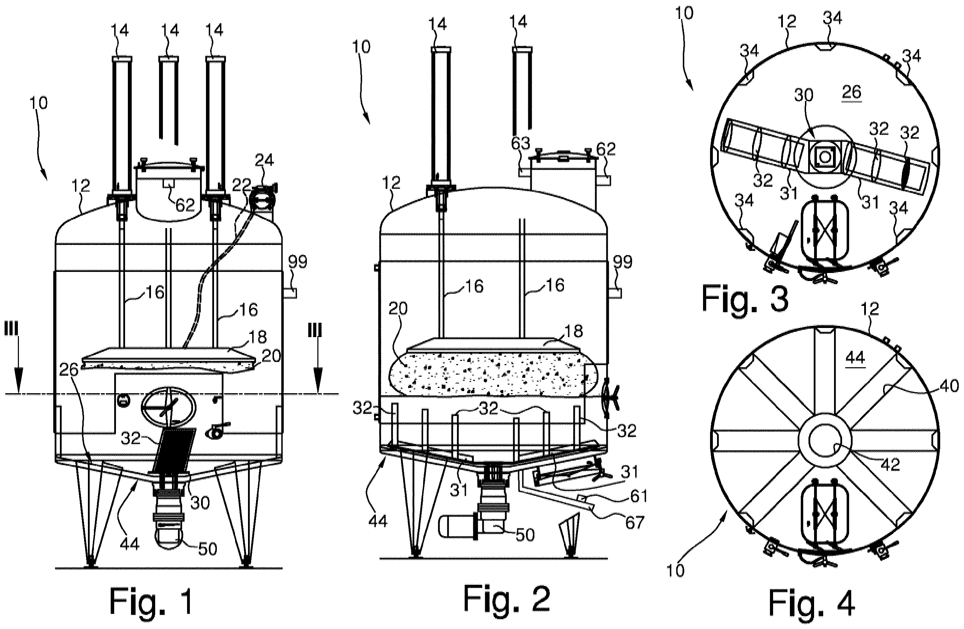

In Figs. 1-20 a vinificator 10 is shown comprising a cylindrical tank 12, for the must, on the top of which three cylinders 14 are mounted, the vertically movable pistons 16 of which support a single plunging plate or horizontal plaque 18.

The cylinders 14 can be pneumatic or hydraulic, or the pistons 16 can be actuated by motors with rack, worm screws, etc.

The plate 18 can thus be moved vertically inside the tank 12 on command.

Below the plate 18 an inflatable membrane 20 is arranged fed by tubes for fluid 22 with which fluid can be pumped - thanks to means 24 for blowing/injecting and preferably also for sucking, for example a blower or turbine - inside the membrane 20 to inflate or deflate it.

The tank 12 preferably has a double bottom, made up of a funnel shaped surface 26 on which the must rests and an underlying surface 44, preferably funnel shaped, even if it could also be flat, inclined, concave, convex or crowned. The surface 26 is interrupted by seven draining baffles 34 (fig. 3), arranged radially and which are in communication with the underlying surface 44 (fig. 4). The number and/or arrangement of the ducts and/or of the baffles can vary according to the type or quantity of must or depending on how hard the cap is. The baffles 34 are made for example with pieces of perforated plate, so that it holds skins and bodies in suspension allowing the juice of the must to be filtered. The surface 44 comprises seven radial ducts 40, these also made from perforated material, adapted for conveying liquid from the periphery to the centre, where a joint 42 receives it, facilitating the evacuation towards the outside through unions or draining tubes 67.

Advantageously, in any case, all of the bottom and even the lower part inside the plating can be equipped with an entire perforated draining surface, preferably removable so as to be able to be cleaned.

Above and at the centre of the surface 26, an optional blade 30 is rotatably mounted, formed by two opposite arms 31, on which vertical baffles 32 are arranged having an elliptical section. The baffles 32 are arranged on the arms 31 at different distances from the rotation centre. Preferably the blade 30 has inclined arms so as to follow the inclination of the surface 26. The blade 30 is actuated by motor means 50, for example an electric motor.

The blade 30 can also have more than two arms, and/or not have any vertical baffles 32. Each arm is equipped with draining baffles, therefore it not only allows the pomace to be evacuated at the end of pressing, but it also allows the must to be drained during the draining and pressing steps. Optionally, the vinificator 10 (and the variant 100 and 200, but not indicated here) also comprises:
- in the top part of the tank 12, a valve 63 for the injection of air/nitrogen/CO₂ from outside;
- a valve 62 (for example a venting valve which is capable of controlling at least 1/100 bar) for adjusting the pressure inside the tank 12 and for the degassing;
- a valve 61 for injecting air and/or nitrogen and/or CO₂ from outside, present on the lower part of the tank 12 mounted on a tube 67 for draining must;
- at least one sensor 99 of the pressure in the tank 12.

It is preferable for the valves 61, 62, 63 and the means 50 to be managed by a processing unit, like a PLC (not shown), which is also connected to the sensor 99 so as to read its output.

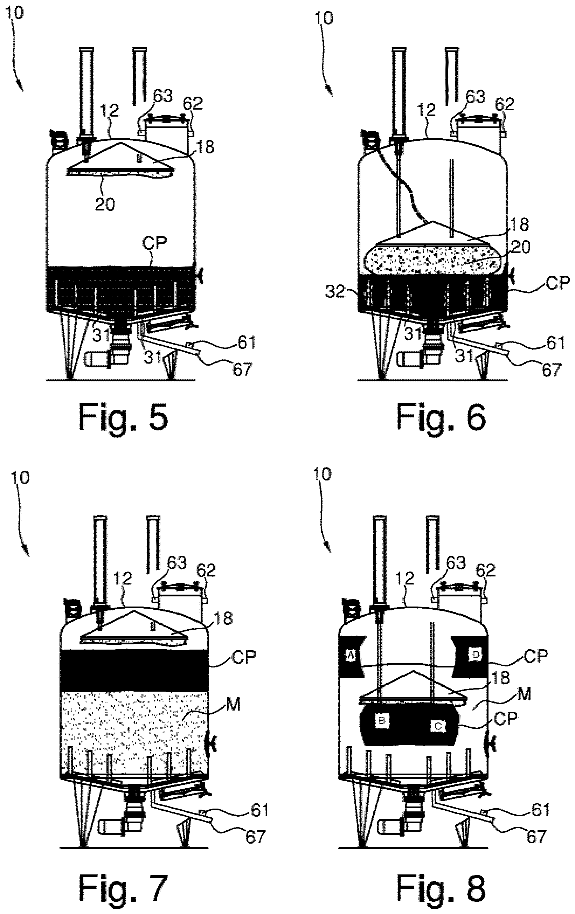

Let us now look at figures 5 and 6. Fig. 5 represents the condition of the vinificator 10 at the end of the vinification process, and therefore also at the end of the plunging cycles. The must is taken away/evacuated from the vinificator (through the draining baffles of the blade 30 and/or the draining discharge ducts) and consequently the cap CP soaked in must lays on the bottom of the vinificator itself, i.e. on the surface 26. The first-pressing must can be recovered (fig. 6) through the pressing of the cap CP, better if at different levels of pressure. It is preferable to start at a low pressure, preferably up to 0.4-0.6 bar, to then increase the pressure up to 1.5-2 bar (pressure normally used in must draining presses).

The pressing process is carried out in this way (here and in the rest of the description L indicates the level of the must):
- the plunging plate 18 is lowered (fig. 6) to a predetermined height (for example to ½ or ¾ of the tank starting from the top) and the membrane 20 is inflated (for example, up to a maximum pressure of about 0.6 bar) so as to act upon the pomace in the cap CP and to squeeze out the must it is imbued in, from it. The pressing can preferably be carried out in a plurality of cycles, for example eight;
- first-pressing must flows out, passing through the draining blade 30 and/or through the baffles 34 and the channels 40, and it is collected outside through draining ducts 67 arranged on the bottom 44.

There is thus the great advantage that the first-pressing must is directly obtained in the vinificator 10, without moving/transferring the pomace and without risks of contamination or loss of organoleptic qualities.

This pressing step is further improved by the blade 30. Apart from evacuating the exhausted pomace, at the end of the pressing, the blade 30 also has the function of promoting the draining of must, opening and cutting the pomace cap CP and thus making it possible to drain the must contained in the pomace cap CP especially where it has been cut.

In order to maximise the conservation of the must and the pomace, in the first pressing step (for example up to 0.5 bar of pressure exerted by the membrane on the pomace), the operation program of the machine can envisage for the draining to be carried out without any movement of the blade 30, i.e. by the pressure of the membrane alone. Once the first pressing is finished, for example up to 0.5 bar (such a pressure could advantageously be settable by a program, for example from 0.3 bar to 0.55 bar with steps of 0.01 bar), then the program can move the blade 30 so as to open the pomace, to position the blade as mentioned earlier on in the description, and facilitate the draining of must at higher pressure.

Indeed, one of the big problems which can be experienced in the pressing step of the pomace is that, as the exerted pressures increase (beyond 0.4-0.5 bar of pressure), the pomace becomes compact making it impossible for the residual must to flow out. The blade 30 has the function of opening the pomace which has become compact due to the pressing and that of allowing the residual must to be drained.

It should be noted that another advantage of the invention is that of being able to carry out the pressing step in a thermoregulated environment, for example for the cryomaceration. The vinificator 10 has some peripheral pockets in which fluid flows at a controlled temperature. Conventional presses with a membrane, on the other hand, do not have thermoregulation systems on the walls, because half of the surface of the press is occupied by the membrane and the other half is occupied by the draining channels, or the dimensions of the thermoregulation pockets are too small with respect to the necessary temperature reduction action.

The other big advantage is that of being able to carry out all the plunging /vinification and pressing operations in a highly controlled atmosphere, both for the pressure as well as for the composition of the present gas. Consequently, there is the maximum amount of vinification quality, and the best preservation of must and pomaces during the draining and pressing steps. Indeed, through the control of the valves 61, 63 and the controlled injection of gas, the pressing can be carried out in inert atmosphere, or in general with a desired composition of gas.

Figures from 13 to 20 show the blade 30 in the eight pressing cycles of the pomace. Before each pressing cycle by means of the membrane 20, the blade 30 is positioned in a different point of the pomace cap CP. In the example the blade 30 moves by about 45° degrees in an anti-clockwise direction at each cycle, and then the cap CP is pressed by the membrane 20. Other rotations are, in any case possible, for example a full rotation at a time or greater fractions.

I.e. each cycle can be made up of:
- rotary movement of the blade 30 in the predetermined point;
- inflation of the membrane 20 to the predetermined pressure and for a predetermined time.
- deflation of the membrane 20 and positioning of the blade 30 in the angular point corresponding to the subsequent pressing cycle.

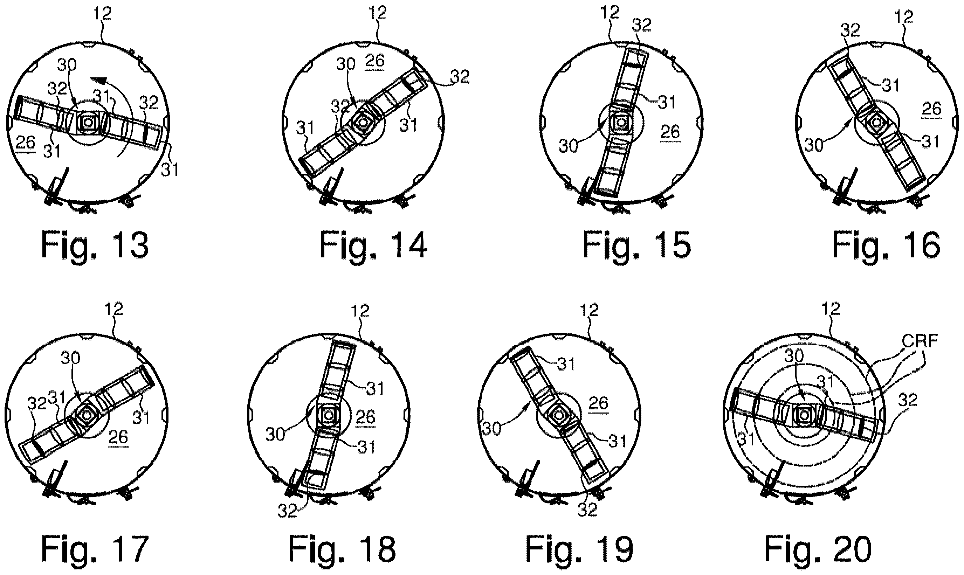

Fig. 20 outlines the circular trajectory of the baffles 32 and shows the effect of their particular arrangement which ensures that each of them penetrates into the cap CP at a different radial distance. At the end of the rotation, each baffle 32 has cut the cap CP along a circumference with different radius, improving the opening and maximising the draining surface (see different circumferences indicated with CRF).

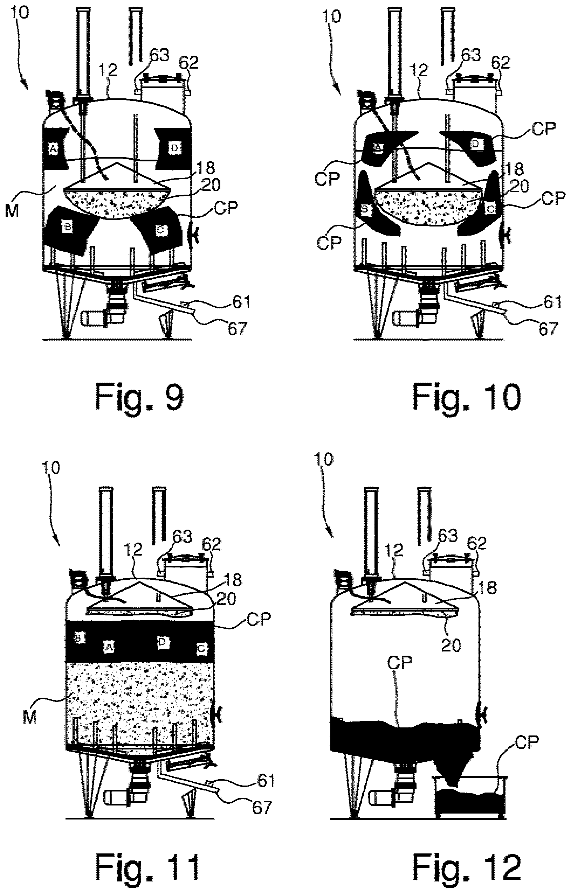

At the end of the pressing process, the exhausted pomace CP is extracted from the tank 10 (see fig. 12), thanks also to the blade 30 that when turning can scrape the bottom 26 and push the pomace towards the discharge hatches.

If the blade 30 is equipped with nozzles for the gas connected to the outside and to the valve 62, when the latter is open, the blade 30 also operates as a movable gas dispenser, improving the oxygenation of the cap.

In the more simple versions, there could even not be a draining blade. In order to drain the must, it can be sufficient for there to be only draining baffles arranged on the bottom and on the plating.

With the invention and its method also the plunging step is improved. It has been mentioned that known plunging pistons either lower the entire cap, not being able in such a way to remix the cap itself but only making it sink into the must, or alternatively lower some grids, so that about half of the cap at a time is sinked and can float back up from below the other half which is still floating, remixing it. However, this effect is very approximate, since it only depends upon convective motion that is established in the liquid must. In brief, the cap floats back up tending to move only vertically. Therefore, there is still the problem of obtaining an actual remixing of the cap and circulation inside of the tank, so that each time a different part of cap is sinked.

This problem is solved thanks to the means of the invention for further moving the cap from the intermediate sinking level towards the bottom of the tank. See figures 7 to 11, which show the steps of a vinification method which can be actuated in the vinificator 10.

In fig. 7 the vinification begins. The vinificator 10 has been filled with de-stemmed grapes and the pomace cap CP has already formed and floats above the liquid must M.

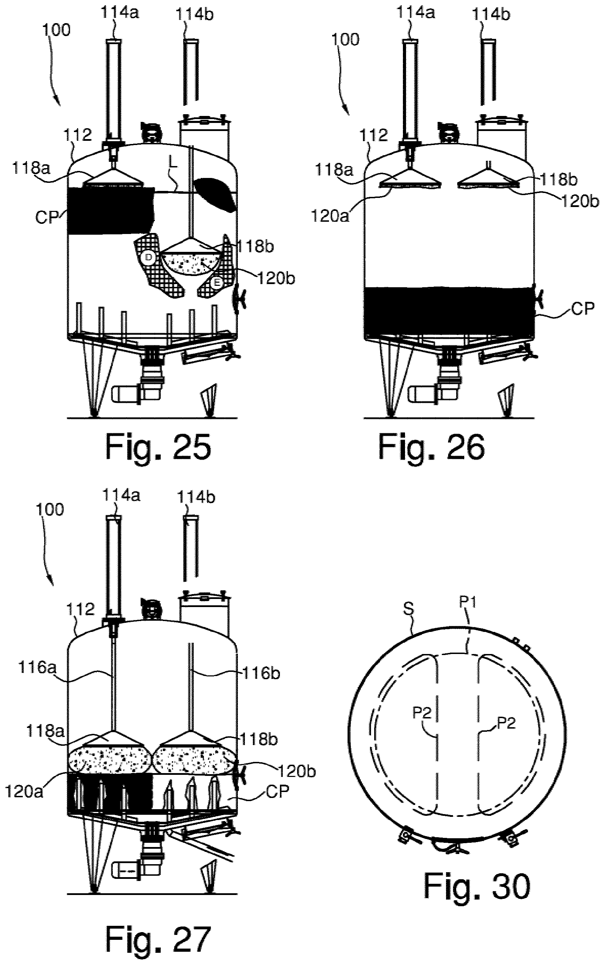

Fig. 8 shows the start of the plunging step. The plunging plate 18 is lowered to break the pomace cap CP and to sink it into the must M (parts B and C). Preferably, the plate 18 is circular, and has a total diameter or surface such as to allow a volume of pomace cap CP to be sinked into the must M. Such a volume preferably varies from about half to 2/3 of it (see for example in fig. 30 the profile of the plunging plate P1 with respect to a tank S).

Then (in figs. 9 and 10) the progressive inflation of the membrane 20 begins, which determines the breaking and/or the detachment, from the membrane 20, of the portion of cap under it (parts B and C). The cap thus broken up is moved away from the plate 18 through the membrane 20 and is pushed to the sides of the plate 18, tending to rise back up along the walls of the tank 12 (being lighter than the must M).

Subsequently, (fig. 11) the cap CP re-compacts on the surface of must M and the part of cap CP that was not sinked into the must (parts A and D) by effect of the plunging, is now in the central part of the cap CP itself, below the action area of the plate 18. The membrane 20 is deflated and the plate 18 is made to rise back up above the new cap CP. With the subsequent plunging cycle, a different part of cap CP (parts A and D) is sinked, thus ensuring that the entire cap CP is broken up and wet.

The remixing of the cap CP is now very effective, because it is certain that the mass of sinked pomace (parts B and C) completely detaches from the plate 18 and is necessarily directed below the cap still floating (parts A and D). The parts B and C come back up like in the prior art by hydrostatic thrust but below the parts of floating cap, and these are therefore turned over and remixed.

The plunging is also carried out without damaging the pomace: the portion of cap sinked into the must is opened and pushed to the sides of the plate 18 in a delicate manner.

It should be understood that during all of the steps described up to here and hereafter, the valves 61, 62, 63 are controlled and operate in cooperation. This makes it possible to control the pressure inside the tank 12, and/or the composition of gasses inside it, very precisely, this means that oenologically it is possible to have more degrees of freedom so as to improve or diversify the produced wine.

It should be noted that the cylinders 14 with relative pistons 16 must have an overall thrust powersuch as to ensure both the plunging step, however big the pomace cap is, as well as, and much more seriously, to resist the counter-thrust of the pressing membrane in the pressing step. Each downward thrusting/pressing plate 18 could thus require a plurality of cylinders 14.

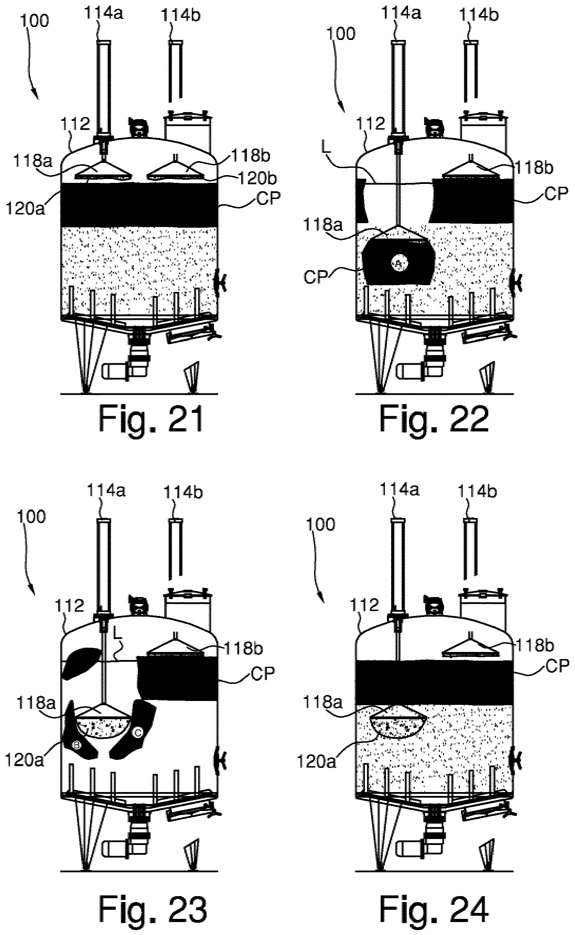

See now fig. 21 illustrating a variant 100 of the vinificator.

This differs from the previous one only for the fact of having a cylindrical tank 112 for the must on the top of which two cylinders 114a, 114b are mounted, the vertically movable pistons 116a, 116b of which each mount a plunging plate or horizontal plaque 118a, 118b.

Each plate 118a, 118b can thus move vertically inside the tank 112 on command, independently from the other. An inflatable membrane 120a, 120b is arranged below each plate 118a, 118b.

In the example only two plates are considered, but the invention can extend to any desired amount of plates.

See now figs. 26 and 27. Fig. 26 represents the condition of the vinificator 100 at the end of the vinification process, and therefore also at the end of the plunging cycles. The must is taken away/evacuated from the vinificator 100 and consequently the cap CP soaked in must lays on the bottom. The first-pressing must (fig. 27) can be recovered through the pressing of the cap CP.

During the pressing process the plunging plates 118a, 118b are lowered (fig. 27) to a predetermined height and the le relative membranes 120a, 120b are inflated so as to act upon the pomace in the cap CP and to squeeze the must it is soaked in out from it.

As previously, the pressing may be carried out with many cycles, with different pressures, with the cooperation of the rotatory blade and in an atmosphere with a controlled composition.

By using two or more smaller membranes 120a, 120b instead of a bigger one 20 makes it possible to press the cap CP better, ensuring a more even and controlled pressure on its surface.

See figures from 21 to 25, which show the steps of a vinification method which can be carried out in the vinificator 100.

In fig. 21 the vinification begins. The vinificator 100 has been filled with de-stemmed grapes and the pomace cap CP has already formed and is floating above the liquid must M.

Fig. 22 shows the start of the plunging step. One of the plunging plates 118a is made to lower so as to break the pomace cap CP and to sink a part of it into the must M (part A). Preferably each plate 118a, 118b is circular, and has an overall diameter or surface such as to allow a volume of cap equal to about ¼ or 1/3 of it (see for example in fig. 30 the profile of the plunging plate P2 with respect to a tank S), to be sinked into the must M.

Then (fig. 23) the progressive inflation of the membrane 120a of the sinked plate begins, determining the breaking and/or the detachment, from the membrane 120a, of the portion of cap below it (parts B and C). The cap thus broken up is moved away from the plate 118a through the membrane 120a and is pushed to the sides of the plate 118a, tending to rise back up along the walls and at the centre of the tank 112 (since it is lighter than the must M). By rising back up, the parts B and C push and break the cap remained on the surface.

Subsequently, (fig. 25) the plate 118a is lifted, and the plate 118b is lowered as before so as to make the remaining part of the floating cap CP (parts D and E) sink into the must M.

Then (fig. 25), the progressive inflation of the membrane 120b begins, which breaks and detaches the parts D and E, which surface with the same principle as the parts B and C, to return to the configuration of fig. 21.

After the action of the plates 118a, 118b, the remixing of the cap CP is complete.

With the method just described, the plunging step is further improved. The cap is remixed to a greater extent and more thoroughly since the sinked portions are each time smaller and more broken up. As a result the broken up sinked pieces of the cap are more numerous, and therefore the overall surface wet by must is greater.

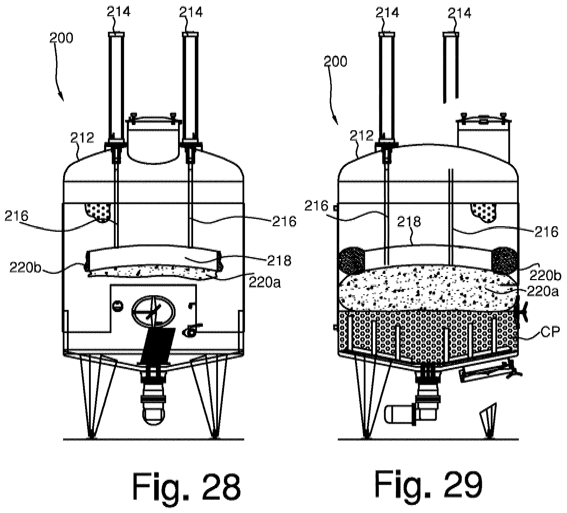

Figs. 28 and 29 show a variant vinificator 200, which differs from the vinificator 10 only for the fact that there is a second inflatable membrane 220b.

The vinificator 200 comprises a cylindrical tank 212 on the top of which three cylinders 214 are mounted, the vertically movable pistons 216 of which support a single horizontal plunging plate 218. Below the plate 218 an inflatable membrane 220a is mounted, functionally identical to the membrane 20.

Around the perimeter of the plate 218, facing towards the inner walls of the tank 212, the second membrane 220b is arranged, in a toroidal configuration. Fig. 29 shows the inflated membrane 220b.

The membrane 220b is inflated before the pressing action begins and with the plate 218 lowered. The purpose is to create an almost fluid-tight seal between the plate 218 and the inside of the tank 212. In this way, the must soaking the pressed pomace is not dispersed above the plate 218 but is forced to flow out from the tank 212. The efficiency of the pressing is thus improved.

It should be noted that each variant of the vinificator may have a second membrane, like the one 220b described hereby, on a plunging plate.

## Claims

1. Fermentation apparatus (10) for a pressed vegetable product made up of juice or fruit extract, in particular for grape must, and the relative skin comprising
- a tank (12) for the must, suitable for making the must ferment so that it creates a layer of floating skin called "cap";
- plunging means (14, 16, 18) for breaking and pushing the cap, or part of it, towards the bottom of the tank with a plunging surface,
by at least one piston (16) which is movable inside the tank and has the plunging surface (18) mounted at the free and movable end thereof, the side of the surface facing towards the bottom of the tank having an inflatable element (20) mounted on it.
**characterised in that** the plunging surface has an area which is smaller than that of the section of the tank so as to let the cap and the must go up at its sides.

2. Apparatus according to claim 1, wherein the plunging means comprise a single plunging surface (18) mounted at the free and movable end of one or more pistons (14, 16) movable inside the tank.

3. Apparatus according to claim 2, wherein the single plunging surface has an area of about half to 2/3 of that of the horizontal section of the tank.

4. Apparatus according to claim 3, wherein the single plunging surface is at the centre of the tank.

5. Apparatus (100) according to claim 1, wherein the plunging means comprise
- two or more plunging surfaces (118a, 118b) mounted at the free and movable end of two or more pistons (114a, 114b) movable inside the tank (112), and
- means for alternately moving the pistons, one at a time or in sub-groups, so as to alternately move the plunging surfaces.

6. Apparatus according to claim 5, wherein the two, three or more plunging surfaces, preferably half-moon shaped, together occupy at least two thirds of the horizontal section of the tank.

7. Apparatus (200) according to any one of the previous claims, comprising a second inflatable element (220b) mounted on the perimeter of a plunging surface (218) adapted for being inflated so as to reach the side walls of the tank (212) and to prevent must from flowing above the plunging surface.

8. Apparatus according to any one of the previous claims, wherein the tank has frustoconical shape,
with the larger base forming the bottom.

9. Apparatus (10) according to any one of the previous claims, comprising on the bottom of the tank means (34, 40, 42) for draining and/or sifting the cap during a pressing cycle carried out with the inflatable means.

10. Apparatus (10) according to any one of the previous claims, comprising means (30) arranged at the bottom of the tank for divaricating apart and/or breaking the cap when it lies on the bottom of the tank.

11. Apparatus (10) according to claim 10, wherein said divaricating means comprise a rotatable member (30) equipped with protrusions (32) adapted for stirring up and/or cutting the cap when the member rotates, said protrusions and/or the rotatable member being equipped with draining means for draining the must during the pressing.

12. Apparatus according to claim 11, comprising motor means (50) adapted for making the rotatable member (30) rotate so that it rotates by a fraction or multiple, also not integer, of round angle at every pressing cycle.

13. Apparatus (10) according to any one of the previous claims, comprising
- one or more sensors of the pressure inside the tank,
- valve means for venting the, or for injecting gas into, the tank,
- control means adapted for detecting the pressure and for driving the valve means to establish a desired pressure inside the tank with a precision of at least 0.01 bar.

14. Apparatus according to any one of the previous claims, comprising
- one or more sensors of the pressure inside the tank,
- means for injecting air or inert gas in a controlled quantity from outside of the tank,
- control means adapted for detecting the pressure during and/or after the deflating of the inflatable means and for driving the injection means so as to inject a quantity of air and/or inert gas into the tank necessary to establish a desired pressure and/or an atmosphere with desired gas composition inside the tank.

15. Apparatus according to claim 14, wherein the injection means are configured for injecting air or inert gas from the bottom of the tank.

## Patentansprüche

1. Fermentationsvorrichtung (10) für gepresste Pflanzenprodukte aus Fruchtsaft oder -extrakt, insbesondere Traubenmost, und der entsprechenden Fruchthaut bestehend aus
- einem Behälter (12) für den Most, geeignet zum Fermentieren vom Most, so dass sich eine schwimmende Hautschicht bildet, die Tresterhut genannt wird;
- Keltermaßnahmen (14, 16, 18) zum Brechen und Stoßen des Tresterhuts beziehungsweise einem Teil davon zur Unterseite des Behälters mit einem Kelterbereich;
durch mindestens einen Kolben (16), der sich im Inneren des Behälters bewegt und dessen Kelterbereich (18) am freien und beweglichen Endstück montiert ist, an der Seite der Fläche, die zur Unterseite des Behälters zeigt, an der ein aufblasbares Element (20) angebracht ist,
**dadurch gekennzeichnet, dass**
der Kelterbereich aus einer kleineren Fläche besteht als der Abschnitt des Behälters, so dass der Tresterhut und/oder der Most an seine Seiten aufsteigen kann.

2. Vorrichtung nach Anspruch 1, wobei die Kelterinstrumente einen einzigen Kelterbereich (18) umfassen, der am freien und beweglichen Endstück von einem oder mehreren beweglichen Kolben (14, 14) im Behälter angebracht ist.

3. Vorrichtung nach Anspruch 2, wobei der einzige Kelterbereich (18) eine Fläche umfasst, der ungefähr die Hälfte bis zu 2/3 vom Horizontalschnitts des Behälters entspricht.

4. Vorrichtung nach Anspruch 3, wobei sich der einzige Kelterbereich in der Mitte vom Behälter befindet.

5. Vorrichtung nach Anspruch 1, wobei die Kelterinstrumente Folgendes umfassen:
zwei oder mehr Kelterbereiche (118a, 118b), die am freien und beweglichen Endstück von zwei oder mehr beweglichen Kolben (114a, 114b) im Behälter (112) angebracht sind, und
Instrumente, um die Kolben alternativ einen nacheinander oder in Untergruppen zu bewegen, so dass die Kelterbereiche abwechselnd bewegt werden.

6. Vorrichtung nach Anspruch 5, wobei zwei, drei oder mehr Kelterbereiche vorzugsweise in Form eines halben Mondes zusammen mindestens 2/3 des Horizontalabschnitts des Behälters umfassen.

7. Vorrichtung (200) nach einem der vorherigen Ansprüche, einschließlich einem zweiten aufblasbaren Element (220b), das an der Außenlinie einen Kelterbereich (218) aufweist, geeignet um sich aufzublasen, um die seitlichen Wände des Behälters (212) zu erreichen und den Rückfluss des Mostes über die Kelterfläche zu verhindern.

8. Vorrichtung nach einem der vorherigen Ansprüche, wobei der Behälter eine Kegelstumpfform mit größerem Grundelement aufweist, das die Unterseite bildet.

9. Vorrichtung (10) nach einem der vorherigen Ansprüche, das an der Unterseite vom Behälter Instrumente (34, 40, 42) enthält, um den Tresterhut während dem Pressen, das durch aufblasbare Instrumente durchgeführt wird, zu dränieren und/oder abzusieben.

10. Vorrichtung (10) nach einem der vorherigen Ansprüche, bestehend aus Instrumenten (30), die an der Unterseite des Behälters angeordnet sind, um den Tresterhut zu spreizen und/oder aufzuspalten, wenn dieser auf der Unterseite des Behälters liegt.

11. Vorrichtung (10) nach Anspruch 10, wobei besagte Instrumente zum Spreizen aus einem rotierenden Körper (30) bestehen, ausgestattet mit Vorsprüngen (32), die geeignet sind, den Tresterhut zu verrühren und/oder zu schneiden, wenn der Körper rotiert, besagte Vorsprünge und/oder rotierender Körper sind mit abführenden Instrumenten ausgestattet, um den Most während dem Pressen abzuführen.

12. Vorrichtung nach Anspruch 11, bestehend aus Motoren (50), die geeignet sind, um den rotierenden Körper (30) derart zu drehen, dass er bei jedem Pressvorgang um einen Bruchteil oder das Vielfache auch eines nicht vollständigen Winkelumlaufs rotiert.

13. Vorrichtung (10) nach einem der vorherigen Ansprüche, bestehend aus
einem oder mehreren Sensoren für den Druck im Inneren des Behälters,
von Ventilinstrumenten, um Gas im Behälter zu entlüften oder einzulassen,
Kontrollmaßnahmen, um den Druck zu erkennen und die Ventilinstrumente zu steuern, um einen gewünschten Druck im Behälter mit einer Genauigkeit von mindestens 0,01 bar festzulegen.

14. Vorrichtung nach einem der vorherigen Ansprüche, bestehend aus
einem oder mehreren Sensoren für den Druck im Inneren des Behälters,
Instrumenten, um von außen des Behälters Luft oder Inertgas in kontrollierter Mengen hinzuzufügen,
Kontrollmaßnahmen, um den Druck während und/oder nach dem Aufblasen der aufblasbaren Instrumente zu erkennen und die Instrumente zu steuern, so dass im Behälter eine Luftmenge und/oder Inertgas eingelassen wird, die notwendig ist, um im Behälter den gewünschten Druck und/oder Atmosphäre mit gewünschter Gaszusammensetzung zu erhalten.

15. Vorrichtung nach Anspruch 14, wobei die Instrumente zum Einlassen ausgelegt sind, um Luft oder Inertgas auf der Unterseite des Behälters einzulassen.

## Revendications

1. Appareil (10) de fermentation destiné au moût d'un produit végétal constitué de jus ou d'extrait de fruit et des peaux correspondantes, en particulier le moût de raisin, comprenant
- une cuve (12) pour le moût, appropriée à la fermentation du moût de manière à créer une couche de peaux flottante dénommée chapeau ;
- des moyens de foulage (14, 16, 18) destinés à briser et à pousser le chapeau ou une partie de celui-ci vers le fond de la cuve à l'aide d'une surface de foulage,
ceci au moyen d'au moins un piston (16) qui est mobile à l'intérieur de la cuve et dispose d'une surface de foulage (18) montée à son extrémité libre et mobile, un élément gonflable (20) étant monté sur le côté de la surface orienté vers le fond de la cuve,
**caractérisé par le fait que**
la surface de foulage a une dimension inférieure à celle de la section de la cuve, de manière à permettre que le chapeau et/ou le moût remonte par ses côtés.

2. Appareil selon la revendication 1, dans lequel les moyens de foulage comprennent une unique surface de foulage (18) montée à l'extrémité libre et mobile d'un ou plusieurs pistons (14, 14) mobiles à l'intérieur de la cuve.

3. Appareil selon la revendication 2, dans lequel la surface de foulage unique (18) a une dimension comprise entre environ la moitié et les 2/3 de la surface de la section horizontale de la cuve.

4. Appareil selon la revendication 3, dans lequel la surface de foulage unique est au centre de la cuve.

5. Appareil selon la revendication 1, dans lequel les moyens de foulage comprennent
deux surfaces de foulage (118a, 118b) ou plus, montées à l'extrémité libre et mobile de deux ou plusieurs pistons (114a, 114b) mobiles à l'intérieur de la cuve (112), et
des moyens permettant de déplacer tour à tour les pistons, un à un ou par sous-groupes, de manière à déplacer tour à tour les surfaces de foulage.

6. Appareil selon la revendication 5, dans lequel les deux ou trois surfaces de foulage ou plus, de préférence en forme de demi-lune, occupent ensemble au moins 2/3 de la section horizontale de la cuve.

7. Appareil (200) selon l'une quelconque des revendications précédentes, comprenant un deuxième élément gonflable (220b) monté sur le pourtour d'une surface de foulage (218), susceptible de se gonfler pour atteindre les parois latérales de la cuve (212) et impêcher le reflux du moût au-dessus de la surface de foulage.

8. Appareil selon l'une quelconque des revendications précédentes, dans lequel la cuve a une forme tronconique dont la plus grande base constitue le fond.

9. Appareil (10) selon l'une quelconque des revendications précédentes, comprenant, sur le fond de la cuve, des moyens (34, 40, 42) permettant de drainer et/ou de tamiser le chapeau au cours d'un cycle de pressurage effectué à l'aide des moyens gonflables.

10. Appareil (10) selon l'une quelconque des revendications précédentes, comprenant des moyens (30) disposés sur le fond de la cuve permettant d'écarter et/ou de briser le chapeau lorsque celui-ci repose sur le fond de la cuve.

11. Appareil (10) selon la revendication 10, dans lequel ces moyens d'écartement comprennent un organe pivotant (30) doté de parties saillantes (32) en mesure de faire bouger et/ou de découper le chapeau lorsque l'organe pivote, ces parties saillantes et/ou l'organe pivotant étant dotés de moyens de drainage pour drainer le moût au cours du pressurage.

12. Appareil selon la revendication 11, comprenant des moyens moteurs (50) permettant de faire tourner l'organe pivotant (30) de manière à ce que celui-ci effectue une rotation d'une fraction de tour ou d'un multiple de tour - même non entier - à chaque cycle de pressurage.

13. Appareil (10) selon l'une quelconque des revendications précédentes, comprenant
un ou plusieurs capteurs de la pression interne à la cuve,
des dispositifs à vanne permettant d'évacuer ou d'injecter du gaz dans la cuve,
des moyens de contrôle en mesure d'enregistrer la pression et de commander les dispositifs à vanne pour établir la pression souhaitée à l'intérieur de la cuve, avec une précision d'au moins 0,01 bar.

14. Appareil selon l'une quelconque des revendications précédentes, comprenant
un ou plusieurs capteurs de la pression interne à la cuve,
des moyens permettant d'injecter, depuis l'extérieur de la cuve, de l'air ou du gaz inerte en quantité contrôlée,
des moyens de contrôle permettant d'enregistrer la pression pendant et/ou après le dégonflage des moyens gonflables et de commander les moyens d'injection, de manière à pouvoir injecter dans la cuve la quantité d'air et/ou de gaz inerte nécessaire pour établir, dans la cuve, la pression voulue et/ou une atmosphère ayant la composition gazeuse que l'on souhaite.

15. Appareil selon la revendication 14, dans lequel les moyens d'injection sont configurés pour injecter de l'air ou du gaz inerte à partir du fond de la cuve.
